# EUROPÄISCHE PATENTSCHRIFT

(11) **EP 1 035 951 B1**
(45) Veröffentlichungstag und Bekanntmachung des Hinweises auf die Patenterteilung: **23.04.2003**
(21) Anmeldenummer: 98955510.7
(22) Anmeldetag: 22.10.1998
(51) Int. Cl.: B25J 7/00, B25J 15/02, B25J 9/10

(54) **MIKROGREIFER**
MICROGRIPPER
MICROPINCE

(30) Priorität: 03.12.1997 DE 19753523
(43) Veröffentlichungstag der Anmeldung: 20.09.2000
(73) Patentinhaber: Forschungszentrum Karlsruhe GmbH, 76133 Karlsruhe (DE)
(72) Erfinder: KOHL, Manfred, D-76149 Karlsruhe (DE); SKROBANEK, Klaus, D-76135 Karlsruhe (DE)
(86) Internationale Anmeldenummer: EP9806706
(87) Internationale Veröffentlichungsnummer: WO99028094

(56) Entgegenhaltungen:
- DE-A- 4 432 253
- M. KOHL ET AL. : "Stress-optimised Integrated Linear Actuators with Shape Memory Effect" ACTUATOR 96 , 5TH INTERNATIONAL CONFERENCE ON NEW ACTUATORS , 26. - 28. Juni 1996, Seiten 367-369, XP002095879 Bremen DE in der Anmeldung erwähnt
- KATSUTOSHI KURIBAYASHI ET AL: "TRIAL FABRICATION OF MICRON SIZED ARM USING REVERSIBLE TINI ALLOY THIN FILM ACTUATORS" 26. Juli 1993 , PROCEEDINGS OF THE INTERNATIONAL CONFERENCE ON INTELLIGENT ROBOTS A SYSTEMS (IROS), YOKOHAMA, JULY 26 - 30, 1993, VOL. VOL. 3, PAGE(S) 1697 - 1702 , INSTITUTE OF ELECTRICAL AND ELECTRONICS ENGINEERS XP000452440 siehe das ganze Dokument
- KOJI IKUTA: "MICRO/MINIATURE SHAPE MEMORY ALLOY ACTUATOR" 13. Mai 1990 , PROCEEDINGS OF THE INTERNATIONAL CONFERENCE ON ROBOTICS AND AUTOMATION, CINCINNATI, MAY 13 - 18, 1990, VOL. VOL. 3, PAGE(S) 2156 - 2161 , INSTITUTE OF ELECTRICAL AND ELECTRONICS ENGINEERS XP000143866 siehe das ganze Dokument
- TAKAGI T ET AL: "ARCHITECTURE COMBINATION BY MICRO PHOTOFORMING PROCESS" 25. Januar 1994 , PROCEEDING OF THE WORKSHOP ON MICRO ELECTRO MECHANICAL SYSTEMS (MEM, OISO, JAN. 25 - 28, 1994, NR. WORKSHOP 7, PAGE(S) 211 - 216 , INSTITUTE OF ELECTRICAL AND ELECTRONICS ENGINEERS XP000528418 siehe Abbildung 7

## Beschreibung

Die vorliegende Erfindung betrifft einen Mikrogreifer mit einem ebenen Linearaktor mit einem ortsfestem und einem Arbeitsende sowie zusätzlichen, vorgespannten ersten und zweiten Stellelementen aus strukturierter Folie einer Formgedächtnislegierung FGL, bei welchen durch Phasentransformation in der FGL Kräfte im Aktor und in den Stellelementen erzeugt werden.

Linearaktoren dieser Art sind aus: **"ACTUATOR 96,** 5th International Conference on New Actuators, 26.-28. June 1996, Bremen, s.366-369" bekannt.

Weiterhin ist aus der die Gattung zeigenden DE-A-195 23 229 ein Mikrogreifer mit einem ebenen Linearaktor mit einem ortsfestem Ende und einem Arbeitsende sowie zusätzlichen, vorgespannten ersten und zweiten Stellelementen bekannt. Der Greifer besitzt ein Paar symmetrisch zueinander angeordneter Greifbacken mit einander gegenüberliegenden Greifflächen, an derer winkelig zwischen 0° und 180° zu den Greifflächen angeordneten Rückseite, die ersten Stellelemente mit ihrer einen Seite sitzen, die ihrerseits mit ihrer anderen Seite an dem Arbeitsende des Linearaktors angesetzt sind, wobei die Greifflächen durch den Stellweg des Linearaktors sowie durch die Verformung der ersten Biegelemente mit ihren Greifflächen gegeneinander bewegbar sind. Neben den ersten Stellelementen sitzen an den Rückseiten mit Abstand die zweiten Stellelelemente, die wiederum mit ihrer einen Seite an den beiden, den Greifflächen abgewandten Enden der Rückseiten der Greifbacken angesetzt und mit ihrer andere Seite ortsfest sind.

Demgegenüber ist es Aufgabe der vorliegenden Erfindung, mit den eingangs genannten Aktoren Aktoren einen Mikrogreifer mit Millimeterabmessungen zur Handhabung kleiner und kleinster Objekte der Mikrotechnik im mm- und Submillimeterbereich zu schaffen.

Zur Lösung der Aufgabe schlägt die Erfindung einen Mikrogreifer nach Anspruch 1 vor. Weitere vorteilhafte Ausgestaltungen der Erfindung sind in den Merkmalen der Unteransprüche zu sehen.

Der erfindungsgemäße Greifer ermöglicht eine aktive Greifbewegung innerhalb der Substratebene einer Mikrostruktur mit hoher Berührungsempfindlichkeit. Er kann dabei eine sehr geringe Baugröße im unteren Millimeterbereich aufweisen. Es ist zu seiner Realisierung insgesamt nur ein einziges Mikrobauteil mit der Möglichkeit hoher Miniaturisierbarkeit erforderlich. Der Greifer ist kompatibel zur Mikroelektronik und ist aufgrund des intrinsischen FG-Effektes sehr zuverlässig. Letzlich erfolgt eine reibungsfreie Bewegung ohne Lager im Greifer, wobei hohe maximale Greifkräfte und -wege bei gegebener Gesamtabmessung erzielt werden können. Letzlich bestehen weitere Vorteile in der Reinraum- und der Vakuumtauglichkeit des Greifers.

Weitere Einzelheiten des Greifers werden im folgenden und anhand der Figuren näher erläutert. Es zeigen:
die Fig. 1 den Greifer in einer perspektivischen Darstellung,
die Fig. 2 den geöffnetem und
die Fig. 3 den geschlossenem Zustand des Greifers.

Formgedächtnis-Materialien zeigen beim Übergang von einer martensitischen Phase unterhalb der Phasenübergangstemperatur des Materials zu einer austenitischen Stammphase durch Erwärmung über die Phasenübergangstemperatur eine thermoelastische Phasentransformation. Unterhalb der Phasentransformationstemperatur ist das Formgedächtnis-Material um mehrere Prozent plastisch deformierbar. Das Material verbleibt im deformierten Zustand, solange bis es über die Phasentransformationstemperatur erwärmt wird, wobei es unter erheblicher Krafterzeugung wieder seine ursprüngliche Gestalt (Gedächtnisgestalt) annimmt. Dieser Effekt wird auch Ein-Weg-Effekt genannt, da er nur bei Temperaturänderung in einer Richtung (Erwärmung) auftritt. Die Gedächtnisgestalt kann durch bestimmte thermomechanische Verfahren eingestellt werden. So kann man auch den Formgedächtniseffekt zusätzlich bei Rücktransformation (Abkühlung) einstellen. In diesem Fall spricht man auch von Zwei-Weg-Effekt. Die maximale Krafterzeugung bei Rücktransformation ist jedoch wesentlich geringer. Ein technisch interessantes Formgedächtnis-Material ist z. B. NiTi, das reversible Dehnungsänderungen bis 8 % zuläßt.

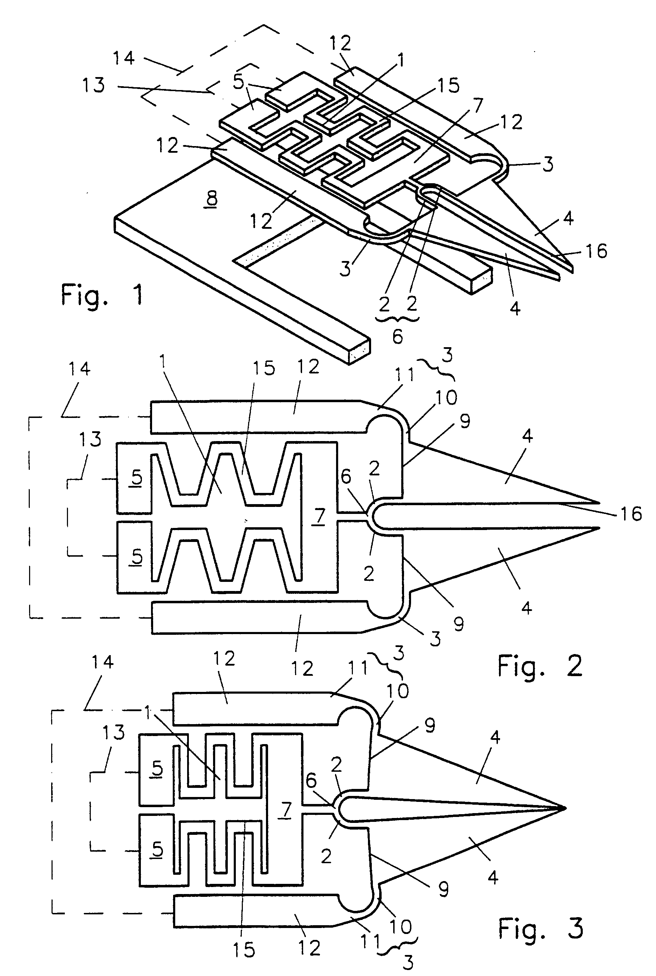

In der Fig. 1 ist ein ebener Linearaktor 1 mit einem ortsfesten Ende 5 und zusätzlichen, vorgespannten Federn oder Stellelementen 2 und 3 aus strukturierter Folie einer solchen Formgedächtnislegierung FGL dargestellt, bei welchem die oberhalb der Phasentransformationstemperatur im Linearaktor 1 erzeugte Kraft gegen den Biegewiderstand der Stellelemente 2 und 3 unterhalb deren Phasentransformationstemperatur wirkt und größer ist als dieser. Umgekehrt ist bei entsprechender Erwärmung des einen und Abkühlung des anderen die Rückstellkraft der Stellelemente 2 und 3 oberhalb ihrer Phasentransformationstemperatur größer als der Rückstellwiderstand des Linearaktors 1 unterhalb dessen Phasentransformationstemperatur.

Der auf diesem Prinzip beruhende FGL-Mikrogreifer besteht nun aus dem Linearaktor bzw. -steilglied 1 und den zwei symmetrisch zueinander angeordneten Greifbacken 4. Diese weisen einander gegenüberliegende Greifflächen 16 auf, an derer winkelig zwischen 0° und 180° zu den Greifflächen 16 angeordneten Rückseite 9, die ersten Stellelemente 2 mit ihrer einen Seite sitzen. Diese sind mit ihrer anderen Seite an dem Arbeitsende 7 des Linearaktors 1 angesetzt, wobei die Greifflächen 16 durch den Stellweg des Linearaktors 1 sowie durch die Verformung der ersten Biegelemente 2 mit ihren Greifflächen gegeneinander bewegbar sind und damit den Greifvorgang bewirken. Neben den ersten Stellelementen 2 sitzen an den Rückseiten 9 mit Abstand zweite Stellelelemente 3, die wiederum mit ihrer einen Seite 10 an den beiden, den Greifflächen 16 abgewandten Enden der Rückseiten 9 der Greifbacken 4 angesetzt und mit ihrer andere Seite 11 ortsfest sind. Die zweiten Stellelemente 3 sind bei der in den Figuren dargestellten Ausführungsform des Greifers gekrümmt in Richtung des Endes 7 vom Aktor 1 ausgebildet. Weiter ist bei der Ausführungsform nach den Figuren am Ende 7 des Linearaktors 1 der Bodenteil eines U-oder V-förmigen Zwischenstückes 6 angesetzt, an dessen gelenkartig als erste Stellelemente 2 wirkenden Schenkeln die Greifbacken 4 sitzen.

Der dargestellte Mikrogreifer besteht somit aus einem Linearstellglied 1 und den zwei Greifbacken 4, die über mindestens zwei erste Stellelemente 2, die mit dem Aktor als Linearstellglied 1 verbunden sind und über mindestens zwei weitere zweite Stellelemente 3 fest auf einem Substrat 8 sitzen. Diese zweiten Stellelemente 3 sind vorzugsweise bogenförmig in Richtung des Endes 7 vom Aktor 1 ausgebildet. Dabei gehen die Stellelemente 3 in Kontaktelemente 12 über, die fest auf dem Substrat 8 sitzen, in der Fig.1 jedoch der Anschaulichkeit wegen darüber dargestellt sind. Damit bilden der Aktor 1, die Stellelemente 2 und 3 sowie die Greifbacken 4 ein einheitliches FGL-Bauteil, bei welchem die Stellelemente 2 und 3 durch ihre geringere Fläche bzw. geringeren Querschnitt als thermische Trennelemente zur thermischen Entkoppelung vovom Aktor 1 dienen. Das FGL-Bauteil wirkt dadurch in gewünschter Weise zusammen, daß alle Elemente gemeinsamer Bestandteil einer strukturierten Folie aus der FGL, die Stellelemente 2 und 3 vom Aktor 1dabei jedoch thermisch weitgehend entkoppelt sind.

Das Linearstellglied 1 wird bei der dargestellten Ausführung von einer gefalteten Planarfeder mit einer mäanderförmigen, an der ortsfesten Seite offenen Struktur gebildet, deren beide ortsfeste Enden 5 als Kontaktelemente ausgeformt sind. Diese Kontaktelemente 5 sind ebenfalls fest auf dem Substrat 8 verankert und über nicht dargestellte Zuleitungen elektrisch mit einem ersten Steuerkreis 13 verbunden. Dadurch ist die Struktur des Aktors durch Stromaufgabe erwärmbar. Der restliche Teil 15 der Planarfeder ist frei beweglich. Die Stellelemente 3 gehen mit ihren äußeren Enden bzw. Seiten 11 ebenfalls in Kontaktelemente 12 über, die wie bereits erwähnt, mechanisch mit dem Substrat 8 verankert und auch über nicht dargestellte Zuleitungen elektrisch mit einem zweiten Steuerkreis 14 verbunden sind. Dadurch ist auch die aus den zweiten Stellelementen 3 und den Kontaktelementen 12 bestehende Struktur durch Stromaufgabe ebenfalls erwärmbar ist. Die Greifbacken 4 sind so dimensioniert, daß sie bei einer Auslenkung durch die Stellelemente 2 und 3 eine zum Greifen hinreichende Steifigkeit aufweisen.

Die Stellelemente 2 und 3 bilden zusammen einen Rückstellfedermechanismus, der mit dem Linearstellglied, dem Aktor 1 gekoppelt ist und sich in einem mechanisch vorgespannten Zustand befindet. Die Stellelemente 2 und 3 und die Planarfeder als Aktor 1 sind so konditioniert, daß sie in ihrer austenitischen Hochtemperaturphase entweder eine unausgelenkte oder eine voll ausgelenkte Gedächtnisgestalt annehmen. Die Planarfeder 1 ist so ausgelegt, daß bei Strombeaufschlagung im Steuerkreis 13 mit ausreichender Stromstärke zur Auslösung der Phasentransformation die erzeugte Stellkraft gegenüber der Rückstellkraft der Stellelemente 2 und 3 überwiegt unddarüberhinaus eine Greifkraft an den Greifflächen 16 erzeugt wird. Andererseits überwiegt bei Strombeaufschlagung im Steuerkreis 14 mit ausreichender Stromstärke zur Auslösung der Phasentransformation die Rückstellkraft der Stellelemente 2 und 3 die Stellkraft der Planarfeder 1. Die erforderliche Minimalstromstärke wird durch die Abmessungen der Planarfeder bzw. der Stellelemente festgelegt. Der Übergang zwischen der Planarfeder 1 und den Stellelementen 2 ist so dimensioniert, daß beide Untereinheiten hinreichend thermisch voneinander entkoppelt sind, so daß bei Strombeaufschlagung in nur einem Steuerkreis im jeweils anderen Steuerkreis 13 oder 14 die Temperatur der entsprechenden Untereinheit unterhalb der entsprechenden Phasentransformationstemperatur bleibt.

Die Figuren 2 und 3 zeigen das Ausführungsbeispiel in geöffnetem und geschlossenen Zustand. Die Greiffunktion der Greifbacken 4 wird durch Strombeheizung des Aktors 1 im Steuerkreis 13 über seine Phasentransformationstemperatur durchgeführt. Da die Stellelemente 2 und 3 im martensitischen Zustand verbleiben, überwiegt die Kraft in Stellrichtung gegenüber der Rückstellkraft und die Greifbacken 4 bewegen sich aufeinander zu. Der Aktor 1 dient zugleich als Wegsensor, dessen Widerstand in den Steuerkreisen 13 und 14 ein Maß für die zurückgelegte Auslenkung der Greifbacken 4 ist. Bei Berührung eines Mikroobjektes mit beiden Greifbacken baut sich im Sensor bzw. im Aktor 1 eine mechanische Spannung auf, die eine Widerstandsänderung in beiden Steuerkreisen verursacht und dadurch eine Bestimmung der Greifkraft ermöglicht. Die Fig.3 zeigt den geschlossenen Zustand des Greifers. Bei Strombeheizung der Stellelemente 3 im Steuerkreis 14 über ihre Phasentransformationstemperatur wird die Rückstellkraft über die Kraft in Stellrichtung erhöht, so daß sich die Greifbacken wieder voneinander wegbewegen. Durch geeignete Ansteuerung der Steuerkreise 13 und 14 können beliebige Zwischenpositionen eingestellt werden.

Als Ausgangsmaterial zur Herstellung der Greiferstruktur dienen dünne Filme, Folien oder gewalzte Bleche aus FGL mit typischen Dicken D im Bereich von 20 bis 200 µm. Dünne Filme aus FGL können mit Sputterverfahren und nachfolgender thermomechanischer Behandlung hergestellt werden. Folien aus FGL im Dickenbereich von 50 µm können z. B. mit dem "Melt-Spinning"-Verfahren realisiert werden. Blechdicken aus NiTi oberhalb 30 µm sind durch Walzen schmelzmetallurgisch hergestellter FGL herstellbar. In gewissen Grenzen kann die Dicke auch durch chemische Ätzverfahren auf den gewünschten Wert eingestellt werden.

Die Mikrostrukturierung des Ausgangsmaterials in die gewünschte Form der Greiferstruktur kann durch Laserschneiden, Erodieren oder durch ein lithographisches Verfahren durchgeführt werden. Als lithographisches Verfahren wird insbesondere das elektrolytische Photoätzverfahren bevorzugt. Dabei wird ein geeigneter Photolack auf das Material aufgebracht, der dann optisch durch Schattenwurf oder direkte Laserschreibverfahren belichtet und nachfolgend entwickelt wird. Der so erzeugte mikrostrukturierte Photolack dient als Schutzmaske beim nachfolgenden elektrolytischen Ätzprozeß, bei dem die ungeschützten Teile in einem elektrolytischen Bad bei Anwesenheit eines elektrischen Feldes selektiv entfernt werden. Aufgrund der hohen chemischen Beständigkeit von FGL-Materialien eignen sich die elektrolytischen Ätzverfahren hier besonders gut.

### Bezugszeichenliste:

- 1: Linearaktor, -stellglied, Planarfeder
- 2: erste Stellelemente
- 3: zweite Stellelemente
- 4: Greifbacken
- 5: ortsfestes Ende
- 6: Zwischenstück
- 7: Arbeitsende
- 8: Substrat
- 9: Rückseite
- 10: eine Seite von 3
- 11: andere Seite von 3
- 12: Kontaktelemente
- 13: erster Steuerkreis
- 14: zweiter Steuerkreis
- 15: restlicher Teil von 1
- 16: Greifflächen

## Patentansprüche

1. Mikrogreifer mit den folgenden Merkmalen:
a) der Mikrogreifer weist einen ebenen Linearaktor (1) mit einem ortsfestem Ende (5) und einem Arbeitsende (7) sowie zusätzliche, vorgespannte erste und zweite Stellelemente (2, 3) auf
b) er besitzt ein Paar symmetrisch zueinander angeordneter Greifbacken (4) mit einander gegenüberliegenden Greifflächen (16), an derer winkelig zwischen 0° und 180° zu den Greifflächen (16) angeordneten Rückseite (9), die ersten Stellelemente (2) mit ihrer einen Seite sitzen, die ihrerseits mit ihrer anderen Seite an dem Arbeitsende (7) des Linearaktors (1) angesetzt sind, wobei die Greifflächen (16) durch den Stellweg des Linearaktors (1) sowie durch die Verformung der ersten Stellelemente (2) mit ihren Greifflächen gegeneinander bewegbar sind,
c) neben den ersten Stellelementen (2) sitzen an den Rückseiten (9) mit Abstand die zweiten Steilelemente (3), die wiederum mit ihrer einen Seite (10) an den beiden, den Greifflächen (16) abgewandten Enden der Rückseiten (9) der Greifbacken (4) angesetzt und mit ihrer anderen Seite (11) ortsfest sind,
**gekennzeichnet durch** die weiteren Merkmale:
d) der Linearaktor (1) sowie die ersten und zweiten Stellelemente (2,3) bestehen aus strukturierter Folie einer Formgedächtnislegierung FGL, bei welchen **durch** Phasentransformation in der FGL Kräfte im Aktor (1) und in den Stellelementen (2,3) in einander entgegengesetzter Richtung erzeugt werden,
e) Aktor (1), Stellelemente (2 und 3) und die **dadurch** betätigten Greifbacken (4) sind gemeinsamer Bestandteil der strukturierten Folie aus der FGL, dabei jedoch thermisch weitgehend voneinander entkoppelt.

2. Mikrogreifer nach Anspruch 1 mit den weiteren Merkmalen:
a) am Ende (7) des Linearaktors (1) ist der Bodenteil eines U-oder V-förmigen Zwischenstückes (6) angesetzt, an dessen gelenkartig als erste Stellelemente (2) wirkenden Schenkeln die Greifbacken (4) sitzen,
b) die zweiten Stellelemente (3) sind gekrümmt ausgebildet.

3. Mikrogreifer nach Anspruch 1 oder 2, **gekennzeichnet durch** die weiteren Merkmale:
a) der Aktor (1) besitzt eine mäanderförmige an der ortsfesten Seite offene Struktur, die einen Steuerkreis (13) bildet, wobei dessen offene Enden (5) als Kontakte ausgebildet sind, mittels denen die Struktur des Aktors (1) **durch** Stromaufgabe erwärmbar ist,
b) die beiden anderen Seiten (11) der zweiten Stellelemente (3) sind als weitere Kontakte (12) ausgebildet, mittels denen die aus den zweiten Stellelementen (3) und den Kontakten (12) bestehende Struktur **durch** Stromaufgabe ebenfalls erwärmbar ist.

4. Mikrogreifer nach Anspruch 2, oder 3, **gekennzeichnet durch** die weiteren Merkmale:
a) die Krümmung der Stellelemente (3) ist dem Ende (7) des Linearaktors (1) zugerichtet.

## Claims

1. Microgripper having the following features:
a) The microgripper consists of a plane linear actuator (1) with a stationary end (5) and a working end (7) as well as of additional, pre-stressed first and second actuating elements (2, 3),
b) it is equipped with a pair of symmetrically arranged clamping jaws (4), the gripping surfaces (16) of which lie opposite to each other, with one side of the first actuating elements (2) being attached to the rear (9) of the gripping jaws, which is arranged at an angle between 0° and 180° to the gripping surfaces (16), and the other side of the actuating elements being attached to the working end (7) of the linear actuator (1), and with the gripping surfaces (16) being movable relative to each other through the displacement of the linear actuator (1) and through the deformation of the first actuating elements (2) with their gripping surfaces,
c) in addition to the first actuating elements (2), the second actuating elements (3) are fixed to the rears (9) at a certain distance, with one side (10) being attached to both ends on the rears (9) of the clamping jaws (4), which are turned away from the gripping surfaces (16), and their other side (11) being stationary,
**characterized by** the following additional features:
d) The linear actuator (1) as well as the first and second actuating elements (2, 3) consist of a structured foil of a shape memory alloy SMA with forces of opposite direction being generated in the actuator (1) and in the actuating elements (2, 3) by phase transformation in the SMA,
e) the actuator (1), actuating elements (2 and 3), and the clamping jaws (4) actuated by them together form part of the structured SMA foil, but are largely decoupled thermally.

2. Microgripper according to Claim 1 having the following additional features:
a) The bottom of a U- or V-shaped intermediate component (6) is attached to the end (7) of the linear actuator (1) with the clamping jaws (4) being fixed to the joint-like legs of the intermediate component as first actuating elements (2),
b) the second actuating elements (3) are designed in a curved manner.

3. Microgripper according to the Claim 1 or 2, **characterized by** the following additional features:
a) The actuator (1) possesses a meandering structure that is open on the stationary side and forms a control circuit (13) with its open ends (5) being designed as contacts, by means of which the actuator structure (1) may be heated when current is applied,
b) both other sides (11) of the second actuating elements (3) are designed as additional contacts (12), by means of which the structure consisting of the second actuating elements (3) and the contacts (12) may also be heated when current is supplied.

4. Microgripper according to Claim 2 or 3, **characterized by** the following additional features:
a) Curvature of the actuating elements (3) is directed towards the end (7) of the linear actuator (1).

## Revendications

1. Micrograppin aux caractéristiques suivantes:
a) Le micrograppin présente un acteur linéaire (1) ayant une extrémité fixe (5) et une extrémité de travail (7) ainsi que des premiers et seconds éléments de réglage précontraints supplémentaires (2, 3),
b) il possède une paire de mâchoires de prise symétriques l'une par rapport à l'autre (4), aux surfaces de prise opposées (16), sur la face arrière (9) desquelles, disposée dans un angle de 0° à 180° par rapport aux surfaces de prise, se trouvent les premiers éléments de réglage (2) disposés sur une de leurs extrémités et qui sont fixés de l'autre côté sur l'extrémité de travail (7) de l'acteur linéaire (1), les surfaces de prise (16) pouvant être déplacées les unes par rapport aux autres par la déformation des premiers éléments de réglage (2),
c) à côté des premiers éléments de réglage (2), sur les faces arrières (9) à une certaine distance, se trouvent les seconds éléments de réglage (3) qui pour leur part sont rattachés sur une des faces (10) aux deux extrémités opposées aux surfaces de prise (16) des faces arrières (9) des mâchoires de prise (4) et fixes de l'autre côté (11),
**caractérisé en outre par** les caractéristiques suivantes:
d) l'acteur linéaire (1) ainsi que les premiers et seconds éléments de réglage (2, 3) sont constitués de feuille structurée d'un alliage à mémoire de forme FGL dans lequel, par transformation de phase, des forces sont produites dans l'acteur (1) et dans les éléments de réglage (2, 3) en direction opposée,
e) l'acteur (1), les éléments de réglage (2 et 3) et les mâchoires de prise ainsi commandées (4) font partie intégrante de la feuille structurée en alliage FGL, tout en étant largement découplés thermiquement les uns des autres.

2. Micrograppin selon la revendication 1 aux caractéristiques supplémentaires:
a) à l'extrémité (7) de l'acteur linéaire (1), la partie de fond d'une pièce intercalaire en U ou V (6) est rattachée, dont les branches agissant comme des premiers éléments de réglage articulés (2) portent les mâchoires de prise,
b) les seconds éléments de réglage (3) présentent une forme cintrée.

3. Micrograppin selon la revendication 1 ou 2, **caractérisé en outre en ce que**
a) l'acteur (1) possède une structure en méandres, ouverte du côté fixe, qui forme un circuit de commande (13) dont les extrémités ouvertes (5) ont la forme de contacts à l'aide desquels la structure de l'acteur (1) peut être chauffée par alimentation de courant,
b) les deux autres côtés des seconds éléments de réglage (3) sont formés comme des contacts supplémentaires (12) à l'aide desquels la structure, constituée des seconds éléments de réglage (3) et des contacts (12) peut également être chauffée par alimentation de courant.

4. Micrograppin selon la revendication 2 ou 3, **caractérisé en ce que**
a) le cintrage des éléments de réglage (3) est orienté vers l'extrémité (7) de l'acteur linéaire (1).
